# EUROPÄISCHE PATENTSCHRIFT

(11) **EP 1 639 280 B1**
(45) Veröffentlichungstag und Bekanntmachung des Hinweises auf die Patenterteilung: **24.10.2007**
(21) Anmeldenummer: 04737260.2
(22) Anmeldetag: 17.05.2004
(51) Int. Cl.: F16H 63/30

(54) **SCHALTGETRIEBE FÜR EIN KRAFTFAHRZEUG MIT FRONT-QUERANTRIEB**
MANUAL GEARBOX FOR A MOTOR VEHICLE WITH FRONT TRANSVERSE DRIVE
BOITE DE VITESSES POUR UN VEHICULE AUTOMOBILE A ENTRAINEMENT TRANSVERSAL AVANT

(30) Priorität: 14.06.2003 DE 10326865
(43) Veröffentlichungstag der Anmeldung: 29.03.2006
(73) Patentinhaber: Dr.Ing. h.c. F. Porsche Aktiengesellschaft, 70435 Stuttgart (DE)
(72) Erfinder: SANDER, Edmund, 71229 Leonberg (DE); KLUGE, Marc, 74354 Besigheim (DE)
(86) Internationale Anmeldenummer: PCT/EP2004/005265
(87) Internationale Veröffentlichungsnummer: WO 2004/111501

(56) Entgegenhaltungen:
- EP-A- 1 065 416
- EP-A- 1 067 312
- DE-C- 4 443 523

## Beschreibung

Die Erfindung betrifft ein Schaltgetriebe für ein Kraftfahrzeug mit Front - Querantrieb gemäß den Merkmalen des Oberbegriffs des Patentanspruchs 1.

Aus dem Stand der Technik (siehe z. B. EP 1 067 312 B1 oder EP 0 046 373 A1) sind Schaltgetriebe - Ausführungen bekannt, bei denen neben einer Getriebeeinganswelle zwei Vorgelegewellen mit entsprechend schaltbaren Gangradpaarungen vorgesehen sind. Die beiden Getriebeausgangswellen eines sog. Drei - Wellen - Getriebes stehen jeweils über eine Stirnradverzahnung mit dem Zahnrad des Achsdifferenzials kämmend in Eingriff. Derartige Getriebeausführungen werden bei Fahrzeugen mit Front - Querantrieb eingesetzt, da sie aufgrund der Verwendung von drei Getriebewellen kurz und kompakt bauend sind. Die auf beiden Getriebeausgangswellen vorgesehenen Schaltzahnräder werden dabei bedarfsweise über mit den Getriebeausgangswellen drehfest verbundene Sperrsynchronisierungen geschaltet. Dazu sind in die Schaltmuffen der Synchronisiereinheiten eingreifende Schaltgabeln erforderlich, die auf entsprechenden Schaltachsen gelagert sind. Bei einem nicht automatisierten Handschaltgetriebe sind dabei Schaltwellen zum Auswählen und Betätigen der Schaltgabeln erforderlich.

Aufgabe der Erfindung ist es, für ein gattungsgemäßes Handschaltgetriebe eine platzsparende und kompakte Lagerung für die Schaltachsen und die Schaltwelle zu entwickeln.

Die Aufgabe wird durch die im Anspruch 1 angegebenen Merkmale gelöst.

Dadurch, dass für die Lagerung bzw. Aufnahme der Schaltachsen und der Schaltwelle eine gemeinsame Lagereinheit vorgesehen ist, die zwischen dem Radsatz und der zentralen Aufnahmeöffnung des Differenzial - Stirnzahnrades angeordnet ist, kann gegenüber bekannten Getriebeausführungen der Gesamt - Bauraum weiter reduziert werden.

Durch die in den Unteransprüchen aufgeführten Maßnahmen sind vorteilhafte Ausgestaltungen und Weiterbildungen der Erfindung möglich.

Die als Lagerbrücke ausgebildete Lagereinheit weist insgesamt drei Lageraugen auf, die der Aufnahme der beiden Schaltachsen sowie der Schaltwelle dienen.

Die Lagerbrücke ist platzsparend so zwischen Radsatz und Differenzial - Stirnzahnrad angeordnet, dass es letzteres zumindest teilweise räumlich überdeckt.

Um möglichst wenig Bauraum zu beanspruchen, wird vorgeschlagen, dass die Lagerbrücke als ein Profilelement ausgebildet, das an seinen beiden Enden mit zwei gekröpft ausgebildeten Befestigungslaschen versehen ist.

Ein Ausführungsbeispiel der Erfindung ist in der nachfolgenden Beschreibung und Zeichnung näher erläutert.

Es zeigen:
- Fig. 1: die Radsatzanordnung eines Drei - Wellen - Getriebes,
- Fig. 2: eine Perspektivansicht auf das Getriebe mit Radsatz und Schaltungsanordnung,
- Fig. 3: eine erste Ansicht auf die Getriebeschaltung,

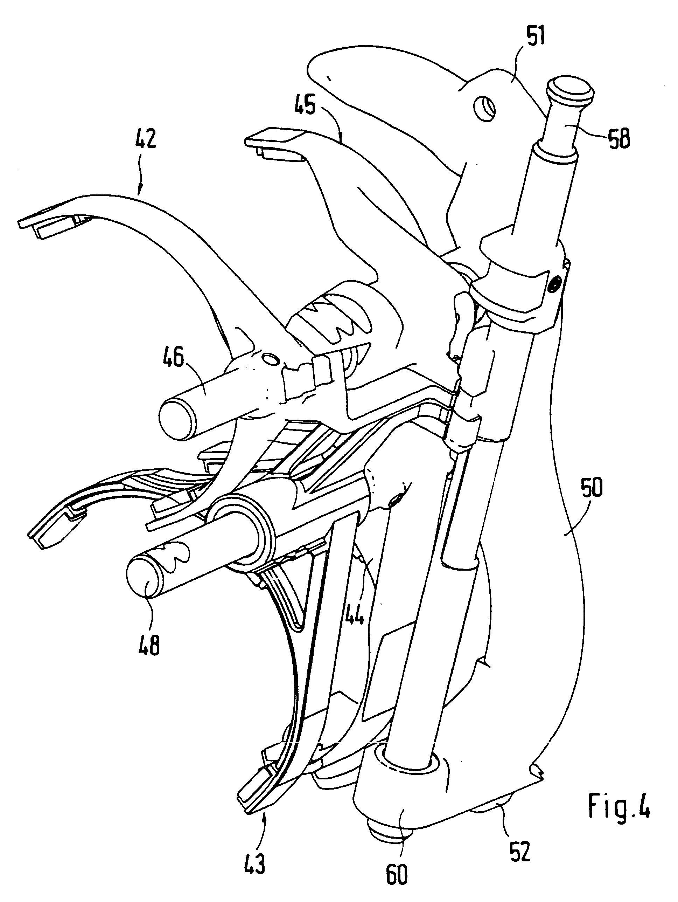

- Fig. 4: eine zweite Ansicht auf die Getriebeschaltung und

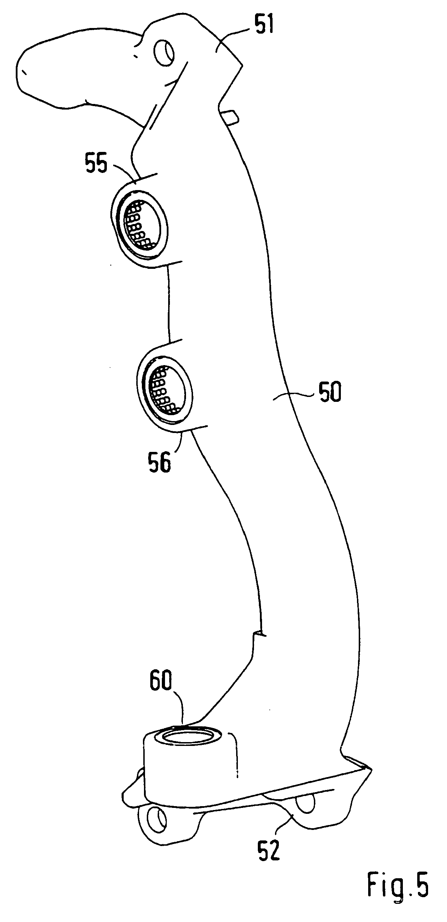

- Fig. 5: eine Lagereinheit für Schaltachsen und Hauptschaltwelle.

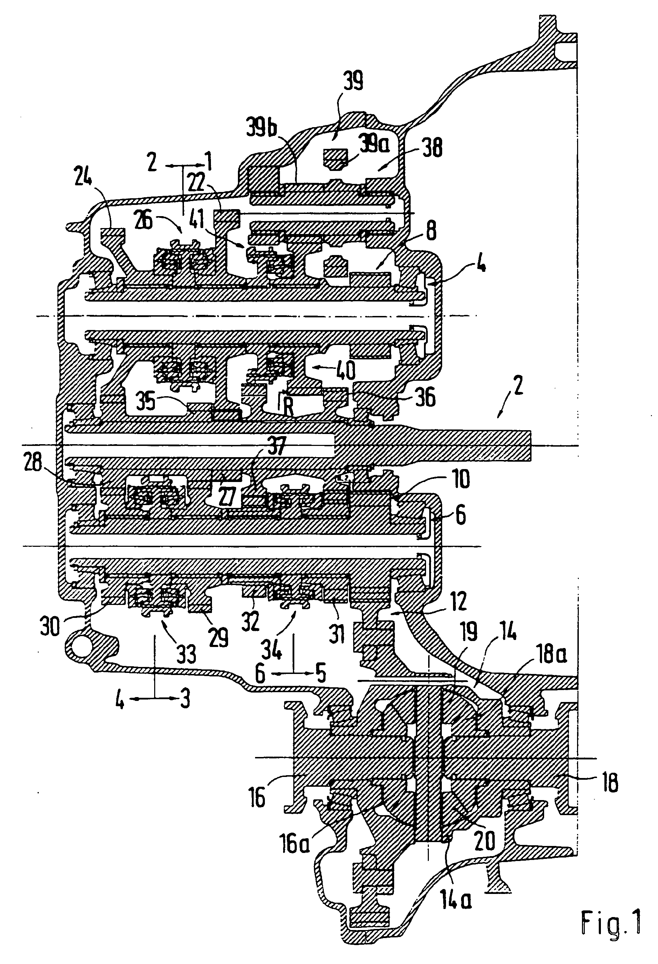

Fig. 1 zeigt die Radsatzanordnung eines Drei - Wellen - Getriebes in "aufgeklappter", nicht räumlich zugeordneter Darstellung, bei der neben einer Getriebeeingangswelle 2 zwei Getriebeausgangswellen 4 und 6 vorgesehen sind, die beide jeweils über ein Zahnrad 8 und 10 mit einem Stirnzahnrad 12 eines Achsdifferenzials 14 in Verbindung stehen. Im Differenzialgehäuse 14a sind auf bekannte Art und Weise die zwei Achswellen 16 und 18 antreibenden Achskegelräder 16a und 18a sowie die beiden Ausgleichskegelräder 19 und 20 angeordnet, die mit den Achskegelrädern 16a und 18a kämmend in Eingriff stehen.

Auf der ersten Getriebeausgangswelle 4 sind die Losräder 22 und 24 für die Gänge 1 und 2 angeordnet, die mit Hilfe einer ersten Sperrsynchronisierung 26 drehfest mit der Getriebeausgangswelle 4 verbunden werden können. Die beiden Losräder 22 und 24 kämmen dabei mit jeweils einem auf der Getriebeeingangswelle 2 angeordneten Gangsrad 27 und 28. Auf der zweiten Getriebeausgangswelle 6 sind die Losräder 29 bis 32 angeordnet, wobei die Losräder 29 und 30 zum Schalten des dritten und vierten Ganges mit einer zweiten Sperrsynchronisierung 33 und die Losräder 31 und 32 zum Schalten der Gänge 5 und 6 mit einer dritten Sperrsynchronisierung 34 zusammenwirken. Alle vier auf der Getriebeausgangswelle 6 angeordneten Losräder kämmen dabei mit auf der Getriebeeingangswelle 2 angeordneten Gangrädern: Losrad 29 mit Gangrad 35, Losrad 30 mit Gangrad 28, Losrad 31 mit Gangrad 36 und Losrad 32 mit Gangrad 37. Für die Umsetzung eines Rückwärtsganges ist zur Drehrichtungsumkehr eine vierte Getriebeachse 38 vorgesehen, auf der ein Zahnrad 39 mit zwei nebeneinander liegenden Zahnradkränzen 39a und 39b drehbar gelagert ist. Das auf der Getriebeausgangswelle 4 angeordnete Losrad 40 für den Rückwärtsgang steht kämmend mit dem zweiten Zahnkranz 39b des Zahnrades 39 in Eingriff, wobei das auf der Getriebeeingangswelle 2 angeordnete Gangrad 36 mit dem erstem Zahnkranz 39a des Zahnrades 39 in Eingriff steht. Losrad 40 wird wiederum über eine vierte Sperrsynchronisierung 41 im Bedarfsfall drehfest mit der Getriebeausgangswelle 4 verbunden.

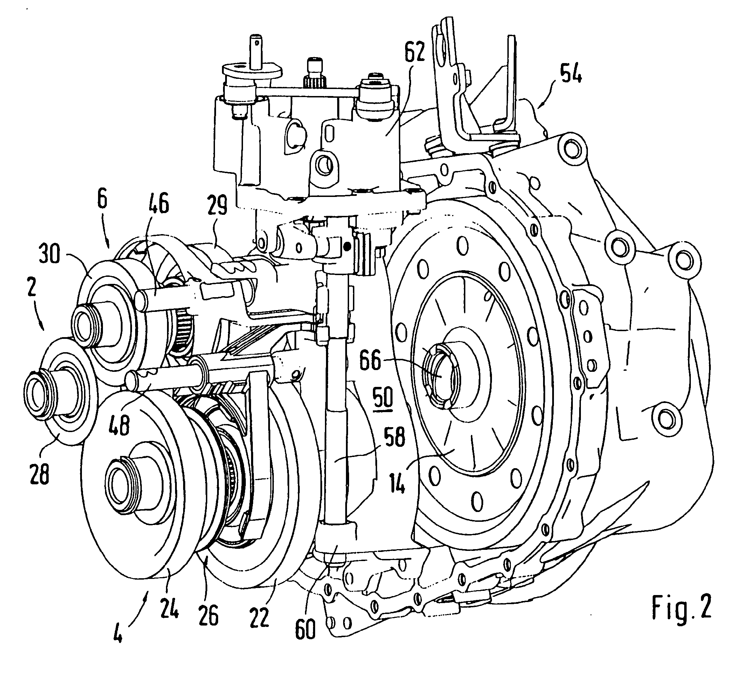

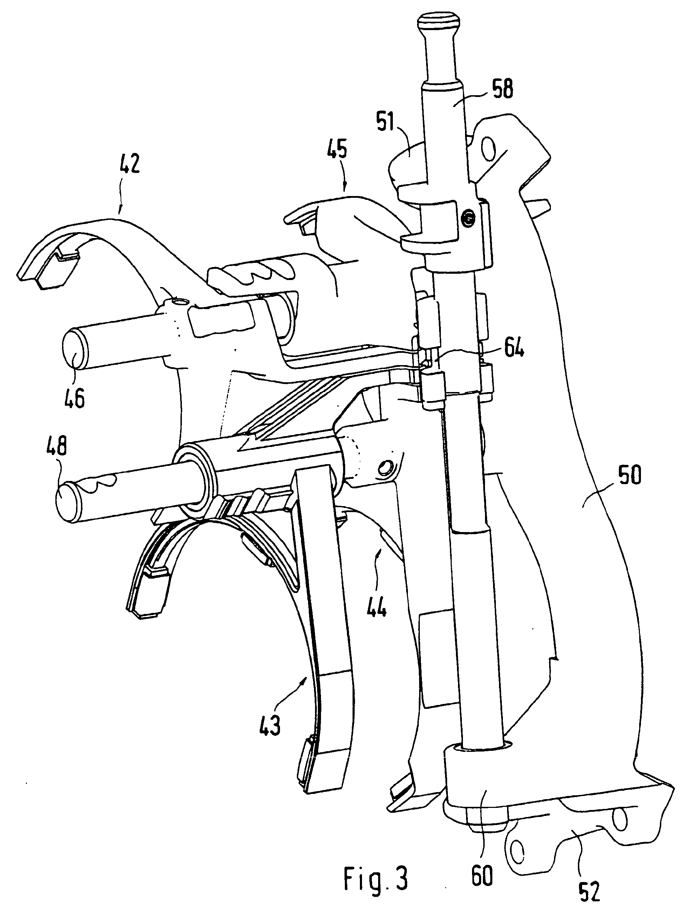

Zum axialen Verschieben der auf den beiden Getriebeausgangswellen 4, 6 angeordneten Sperrsynchronisierungen 26, 33, 34 und 41, sind, wie z. B. Fig. 3 verdeutlicht, vier Schaltgabeln 42 bis 45 vorgesehen, die auf bekannte Art und Weise in Schaltmuffen der Sperrsynchronisierungen eingreifen. Zur Lagerung der Schaltgabeln 42 bis 45 sind zwei Schaltachsen 46 und 48 vorgesehen, auf denen die Schaltgabeln 42 und 45 bzw. die Schaltgabeln 43 und 44 verschiebbar gelagert sind. Zur Lagerung der beiden Schaltachsen 46 und 48 ist eine als Lagerbrücke ausgebildete Lagereinheit 50 vorgesehen, die mit Hilfe von zwei gekröpft ausgebildeten Befestigungslaschen 51 und 52 am Getriebegehäuse 54 befestigt ist. Am oberen Ende der Lagerbrücke 50 sind zwei Lageraugen 55 und 56 ausgebildet, in die die beiden Schaltachsen 46 und 48 aufgenommen sind. Zum Auswählen und Betätigen der Schaltgabeln 42 bis 45 ist eine einzige Hauptschaltwelle 58 vorgesehen, die ebenfalls an ihrem einen Ende an bzw. in der Lagerbrücke 50 gelagert ist. Dazu ist ein drittes Lagerauge 60 am unteren Ende der Lagerbrücke 50 vorgesehen, das im wesentlichen senkrecht zu den beiden ersten Lageraugen 55 und 56 ausgerichtet ist. Die Hauptschaltwelle 58 ist an ihrem oberen Ende in einem Gehäusedeckel 62 gelagert, der wiederrum an einem nicht dargestellten Getriebegehäusedeckel, der am Getriebegehäuse 54 angeflanscht ist, befestigt ist. Im Gehäusedeckel 62 ist der Wähl- und Schaltmechanismus (nicht dargestellt) für eine Translations- und Rotationsbewegung der Hautschaltwelle 58 integriert. Zum Auswählen und Betätigen der einzelnen Schaltgabeln 42 bis 45 ist an der Hauptschaltwelle 58 ein Schaltfinger 64 vorgesehen, der entsprechend der vorgewählten axialen Lage der Hauptschaltwelle 58 in ein Schaltmaul der entsprechenden Schaltgabel eingreift. Eine Drehbewegung der Hauptschaltwelle 58 nach links bzw. nach rechts bewirkt eine axiale Verschiebung der ausgewählten Schaltgabel, durch die dem jeweiligen Losrad zugeordnete Sperrsynchronisierung aktiviert wird. Wie aus Fig. 2 ersichtlich, ist die Lagerbrücke 50 platzsparend zwischen dem Radsatz (Getriebeeingangswelle 2, Getriebeausgangswelle 4 und 6) und der zentralen Öffnung 66 im Achsdifferenzial 14, durch die die Achswelle 16 hindurchgeführt ist, angeordnet.

## Patentansprüche

1. Schaltgetriebe für ein Kraftfahrzeug mit Front - Querantrieb, mit einem Radsatz, der aus einer Getriebeeingangswelle und mindestens zwei Getriebeausgangswellen besteht, die beide über ein Zahnrad mit dem Stirnzahnrad eines Achsdifferenzials kämmend in Eingriff stehen, wobei eine drehfeste Verbindung der auf beiden Getriebeausgangswellen (4, 6) vorgesehenen Los- bzw. Schaltzahnräder mit den ihnen zugeordneten Kupplungseinheiten oder Synchronisierungskupplungseinsheiten durch auf den Schaltachsen (46, 48) verschiebbar angeordnete Schaltgabeln erfolgt, die über mindestens eine Schaltwelle (58) auswählbar und betätigbar sind,
**dadurch gekennzeichnet, dass**
zur Lagerung bzw. Aufnahme der Schaltachsen (46, 48) und der Schaltwelle (58) eine gemeinsame, einstückig als Lagerbrücke (50) ausgebildete Lagereinheit vorgesehen ist, die zwischen dem Radsatz bestehend aus der Getriebeeingangswelle (2), und den Getriebeausgangswelle (4, 6) und der zentralen Öffnung (66) im Achsdifferenzial (14) angeordnet ist.

2. Schaltgetriebe nach Anspruch 1, **dadurch gekennzeichnet, dass** die als Lagerbrücke Lagereinheit (50) ausgebildete, zwei Lageraugen (55, 56) für die beiden Schaltachsen (45, 46) und ein drittes, senkrecht zu den beiden ersten Lageraugen ausgerichtetes Lagerauge (60) für die Aufnahme der Schaltwelle (58) aufweist.

3. Schaltgetriebe nach Anspruch 2, **dadurch gekennzeichnet, dass** die Lagerbrücke (50) das Differenzial - Stirnzahnrad (12) des Achsdifferenzials (14) zumindest teilweise räumlich überdeckt.

4. Schaltgetriebe nach Anspruch 2 oder 3, **dadurch gekennzeichnet, dass** die Lagerbrücke (50) als Profilelement ausgebildet ist, das an seinen beiden Enden mit zwei gekröpft ausgebildeten Befestigungslaschen (51, 52) versehen ist.

## Claims

1. A manual gearbox for a motor vehicle with front transverse drive, with a wheel set consisting of a gearbox input shaft and at least two gearbox output shafts which both mesh with the spur gear of an axle differential via a gearwheel, wherein a rotationally fixed connection between the idler or selector gears, which are provided on the two gearbox output shafts (4, 6), and the associated clutch units or synchronising clutch units is produced by means of selector forks which are displaceably arranged on the selector spindles (46, 48) and which are selectable and actuatable via at least one selector shaft (58), **characterised in that**, to mount or receive the selector spindles (46, 48) and the selector shaft (58), a common bearing unit is provided which is formed in one piece as a bearing bridge (50) and is arranged between the wheel set, which consists of the gearbox input shaft (2) and the gearbox output shafts (4, 6), and the central opening (66) in the axle differential (14).

2. A manual gearbox according to claim 1, **characterised in that** the bearing unit (50), which is formed as a bearing bridge, has two bearing eyes (55, 56) for the two selector spindles (45, 46)¹ and a third bearing eye (60) which is orientated perpendicularly to the
¹ The reference numerals for the selector spindles should be (46, 48). two first bearing eyes and is provided for receiving the selector shaft (58).

3. A manual gearbox according to claim 2, **characterised in that** the bearing bridge (50) at least partly spatially covers the differential spur gear (12) of the axle differential (14).

4. A manual gearbox according to claim 2 or 3, **characterised in that** the bearing bridge (50) is formed as a profiled member which is provided at its two ends with two offset fastening plates (51, 52).

## Revendications

1. Boîte de vitesses pour un véhicule automobile à traction avant, comportant un ensemble de pignons, qui est formé par un arbre d'entrée de boîte de vitesses et au moins deux arbres de sortie de boîte de vitesses, lesquels engrènent tous deux avec le pignon droit d'un différentiel d'essieu par l'intermédiaire d'une roue dentée, sachant que les pignons fous et pignons de rapport, prévus sur les deux arbres de sortie de boîte de vitesses (4, 6), sont assemblés de manière solidaire en rotation avec les unités d'embrayage ou unités d'embrayage synchronisées qui leur sont associées, par l'intermédiaire de fourchettes de sélection, qui sont montées de manière coulissante sur les axes de commande (46, 48) et qui peuvent être sélectionnées et actionnées par au moins un arbre de changement de rapport (58),
**caractérisée en ce que**, pour le montage ou la réception des axes de commande (46, 48) et de l'arbre de changement de rapport (58), il est prévu une unité de palier commune, qui est réalisée d'un seul tenant sous forme de pont de montage (50) et qui est montée entre l'ensemble de pignons, formé par l'arbre d'entrée de boîte de vitesses (2) et les arbres de sortie de boîte de vitesses (4, 6), et l'ouverture centrale (66) dans le différentiel d'essieu (14).

2. Boîte de vitesses selon la revendication 1, **caractérisée en ce que** l'unité de palier (50), réalisée sous forme de pont de palier, comporte deux logements de palier (55, 56) pour les deux axes de commande (45, 46) et un troisième logement de palier (60), orienté perpendiculairement entre les deux premiers logements de palier et destiné à recevoir l'arbre de changement de rapport (58).

3. Boîte de vitesses selon la revendication 2, **caractérisée en ce que** le pont de montage (50) couvre dans l'espace au moins partiellement le pignon droit (12) du différentiel d'essieu (14).

4. Boîte de vitesses selon la revendication 2 ou 3, **caractérisée en ce que** le pont de montage (50) est réalisé sous forme d'élément profilé, dont les deux extrémités sont munies de pattes de fixation (51, 52) coudées.
